# EUROPEAN PATENT SPECIFICATION

(11) **EP 3 686 572 B1**
(45) Date of publication and mention of the grant of the patent: **16.03.2022**
(21) Application number: 19862009.8
(22) Date of filing: 04.09.2019
(51) Int. Cl.: G01M 17/02, B60C 99/00, G06T 7/00, G06T 7/12, B60C 11/03

(54) **TIRE TESTING DEVICE**
REIFENPRÜFVORRICHTUNG
DISPOSITIF DE TEST DE PNEU

(30) Priority: 21.09.2018 JP 2018176926
(43) Date of publication of application: 29.07.2020
(73) Proprietor: A&D Company, Limited, Tokyo 170-0013 (JP)
(72) Inventor: ITO, Yukihisa, Kitamoto-shi, Saitama 364-8585 (JP); KANEKO, Yoichi, Kitamoto-shi, Saitama 364-8585 (JP); KIDO, Kazuki, Kitamoto-shi, Saitama 364-8585 (JP); OKAMOTO, Kazuki, Kitamoto-shi, Saitama 364-8585 (JP); TSUDA, Toru, Kitamoto-shi, Saitama 364-8585 (JP)
(74) Representative: Betten & Resch
(86) International application number: PCT/JP2019/034724
(87) International publication number: WO 2020/059490

(56) References cited:
- CN-A- 108 225 798
- JP-A- H0 363 504
- JP-A- H0 363 504
- JP-A- H05 196 557
- JP-A- 2005 265 748
- JP-A- 2006 133 015
- JP-A- 2010 078 416
- JP-A- 2011 203 207
- KR-A- 20090 046 181
- KR-A- 20090 046 181
- US-A- 5 616 839

## Description

### Technical Field

The present invention relates to a tire testing apparatus.

### Background Art

A wear test of a tire for use in an automobile and the like is performed by multiplying a force (ground contact force) applied to the tire and a slip amount of the tire by each other to calculate wear energy. Then, heretofore, measurement of the ground contact force has been performed, for example, by embedding a sensor for measuring the ground contact force in a road surface. Moreover, the slip amount has been obtained by imaging a ground contact surface of the tire and performing image processing therefor.

As such a conventional technology, for example, Patent Literature 1 described below is present.

In Patent Literature 1, a camera and a transparent round bar are embedded in a road surface, and a pressure sensor is installed around the round bar, whereby the measurement of the ground contact force and the imaging of the ground contact surface of the tire are performed.

### Citation List

### Patent Literature

Patent Literature 1: JP 2005-214860 A

### Summary of Invention

### Technical Problem

In Patent Literature 1, a part of an imaged image is modeled, and a range in which the part is modeled is subjected to pattern matching, whereby a slip amount is specified. However, there is a problem that it is difficult to set the range in which the part is modeled while such range setting is manually performed by an operator or the like.

That is, when such a modeling range is set narrow, accuracy of the pattern matching is reduced since the number of feature portions in the image is small. Meanwhile, when the modeling range is set wide, there is a problem that the pattern matching cannot be performed since the range extends off the imaged image. Particularly in the case of a drum-type tire testing apparatus that images a tire while bringing the tire into contact with a drum and rotating the tire, there is a problem that processing for the pattern matching is difficult since an imaging position of the tire moves following the rotation of the drum.

Another device known from CN 108 225 798 comprises a tire slip amount test system that detects the slip amount based on the displacement of marking points that are physically sprayed on selected positions of the tire tread. It has a test platform provided with a glass table plate that is arranged in a frame.

The frame is connected with a tire that is connected with a rolling control mechanism. A side wall of the frame is provided with a laser corresponding to the front and rear of tire rolling direction. A circle of a LED illumination lamp is arranged in the glass table plate to surround a contact surface of the tire and the glass table plate. A camera is arranged in the contact surface of the tire and the glass table plate. A workstation is connected with the LED illumination lamp. The camera data receives image data and processes a data display.

Other devices are known from JP H03 63504 and KR 2009 0046181.

### Solution to Problem

In this connection, the inventor of the present invention has invented a tire testing apparatus of the present invention in view of the above-described problems.

A first invention is a tire testing apparatus of a drum type according to claim 1.

By using the present invention, division processing at the time of performing such image information matching processing for calculating the slip amount can be set automatically and appropriately.

In the above-mentioned invention, the division processing unit can be configured like a tire testing apparatus that divides the image information subjected to the edging processing into regions with a predetermined size, and in each of the divided regions, performs processing for repeating the division of the region until the number of bright spot pixels in the region becomes less than a predetermined threshold value.

The matching processing is performed by using the edged image information. Therefore, when the number of bright spot pixels does not satisfy a predetermined condition regarding the bright spot pixels, for example, is a predetermined threshold value or more, then a desired resolution is not obtained. Therefore, in order to obtain the desired resolution, it is preferable to repeat the division of the regions until the bright spot pixels satisfy the predetermined condition.

In the above-mentioned invention, the matching processing unit can be configured like a tire testing apparatus that performs matching processing for matching the divided region and image information of the ground contact surface of the tire with each other, the image information being subjected to the edging processing at different time from the divided region.

By the present invention, slips from a tread start to a kickout can be matched in a time series, and accordingly, an influence of a tire curvature radius is less liable to be given, and a calculation error of the slip amount can be reduced.

In the above-mentioned invention, the slip amount calculation processing unit can be configured like a tire testing apparatus that: computes a coordinate of a point at a predetermined position in the divided region and a coordinate of a corresponding point in the matched region and thereby calculates a displacement; and calculates the slip amount by using the calculated displacement.

A computer program of the present invention according to claim 4 is disclosed.

### Advantageous Effects of Invention

By using the tire testing apparatus of the present invention, the range in which such image pattern matching for calculating the slip amount of the tire can be set automatically and appropriately.

### Brief Description of Drawings

Fig. 1 is a view illustrating a whole of an example of a tire testing apparatus of the present invention.
Fig. 2 is an enlarged view of a vicinity of a sensor installation portion of the tire testing apparatus of the present invention.

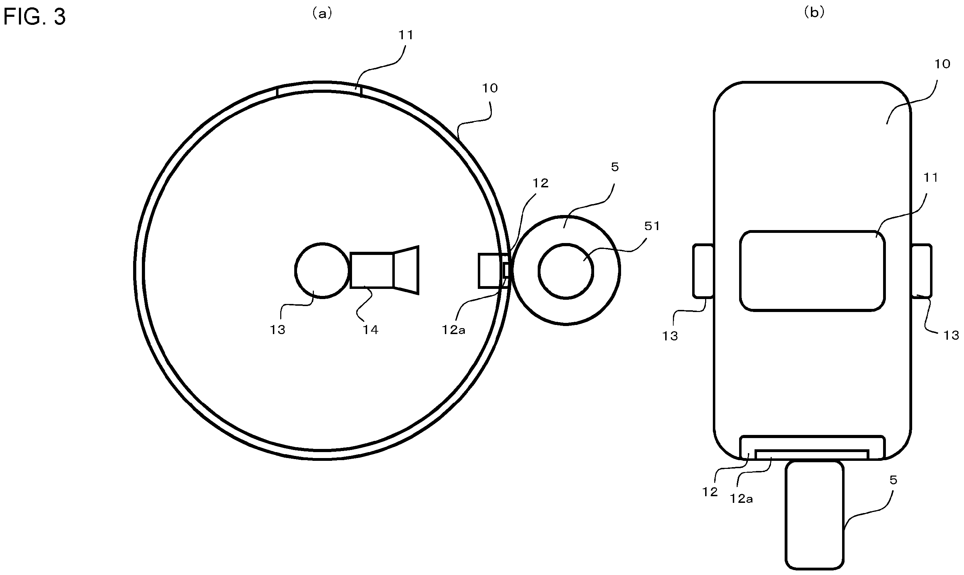

Figs. 3(a) and 3(b) are longitudinal cross-sectional and top plan views of the tire testing apparatus of the present invention.
Figs. 4(a) and 4(b) are views schematically illustrating states in which imaging by an imaging device and measurement of a ground contact force by a sensor are performed in the tire testing apparatus of the present invention.
Fig. 5 is a diagram schematically illustrating an example of hardware of a control computer of the tire testing apparatus of the present invention.
Fig. 6 is a block diagram schematically illustrating an example of a processing function in the control computer.
Fig. 7 is a flowchart illustrating an example of a processing process in the tire testing apparatus of the present invention.
Figs 8(a) and 8(b) are views schematically illustrating a state of imaging a ground contact surface of a tire and image information obtained thereby, the information being regarding the ground contact surface of the tire at every angle θ_{T} of a tire shaft.
Fig. 9 is a view illustrating an example of the image information of the ground contact surface of the tire.
Fig. 10 is a view illustrating an example of image information in which the image of Fig. 9 is subjected to gray-scale conversion.
Fig. 11 is a view illustrating an example of edged image information.
Fig. 12 is a view schematically illustrating processing for dividing the edged image information of the ground contact surface of the tire into regions with a predetermined size.
Fig. 13 is a view schematically illustrating processing for dividing the regions on the basis of the number of bright spot pixels.
Fig. 14 is a view schematically illustrating a template and a center coordinate thereof.
Fig. 15 is a view schematically illustrating processing for performing matching processing between edged image information of the ground contact surface of the tire at different time and image information of the template and specifying a center coordinate of a corresponding region.
Fig. 16 is a view illustrating a state in which a slip amount is displayed to be superimposed on the edged image information of the ground contact surface of the tire.

### Description of Embodiments

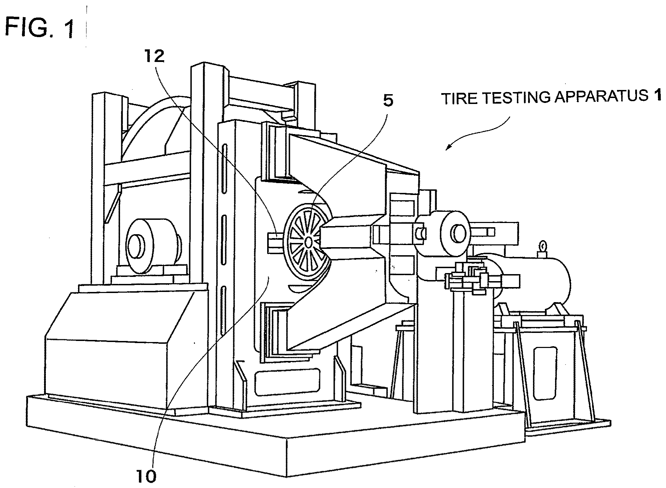

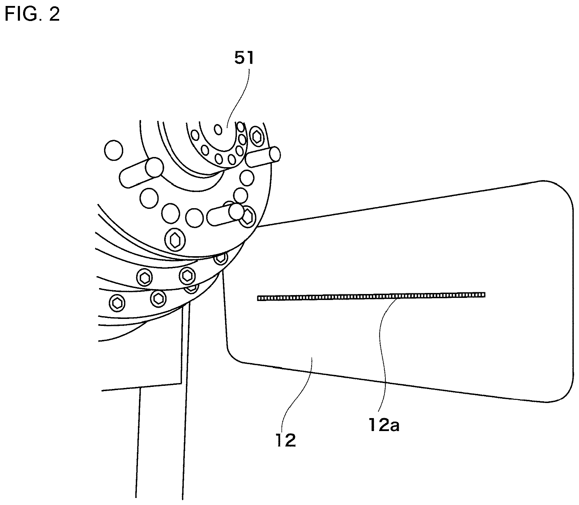

An example of an exterior appearance of a tire testing apparatus 1 of the present invention is illustrated in Fig. 1. Moreover, an enlarged view of a vicinity of a sensor installation portion for performing measurement of a ground contact force, the sensor installation portion going to be described later, is illustrated in Fig. 2.

The tire testing apparatus 1 is a drum-type testing apparatus for measuring a ground contact force of a tire 5 and imaging a ground contact surface of the tire 5. The tire testing apparatus 1 performs a test by bringing the tire 5 as a test target into ground contact with an outer circumferential surface (drum surface) of a drum 10 that rotates about a drum shaft 13. A part of the drum surface is provided with: the sensor installation portion including a sensor for measuring a ground contact force of the tire 5; and a transmission portion 11 for performing imaging by an imaging device 14.

In such a sensor installation portion 12, a plurality of, for example, approximately eighty 3-component force sensors 12a (sensors 12a which measure forces in the respective directions of an X-axis, a Y-axis and a Z-axis) are installed in a width direction of the drum surface. The drum 10 rotates about the drum shaft 13, whereby a surface (ground contact surface) of the tire 5 is brought into ground contact with the sensors 12a of the sensor installation portion 12, and the measurement of the ground contact force of the tire 5 is thereby performed. As the 3-component force sensors 12a, for example, Force Matrix Sensors (FMSs) manufactured by the applicant can be used.

It is preferable that, in the transmission portion 11, a portion from an inside of the drum 10 to an outside thereof be composed of a transparent material so that the imaging device 14 is capable of imaging the ground contact surface of the tire 5, which is brought into ground contact with the transmission portion 11. For example, reinforced glass, reinforced plastics and the like are mentioned; however, the transmission portion 11 is not limited to these. Moreover, regarding a friction coefficient of the transmission portion 11, it is preferable to use a material with a friction coefficient same as or approximate to that of the drum surface.

In an inside of a housing of the drum 10, the imaging device 14 that images the ground contact surface of the tire 5 via the transmission portion 11 is provided. Preferably, a lens of the imaging device 14 is fixed in advance onto a diameter, which connects the drum shaft 13 and the transmission portion 11 to each other, so as to be directed toward the transmission portion 11, and a tire surface of the tire, which is brought into ground contact with the transmission portion 11, is imaged from the inside of the housing of the drum 10 via the transmission portion 11. However, such a configuration can also be adopted so that a reflecting member such as a mirror is provided in the inside of the housing of the drum 10, and that the imaging device 14 images the ground contact surface of the tire 5 via the reflecting member and the transmission portion 11.

The tire testing apparatus 1 includes a tire support mechanism that supports the tire 5 freely rotatably about the tire shaft 51, and moves the tire support mechanism back and forth with respect to the drum 10, thus making it possible to perform a control to bring the tire 5 into ground contact with the outer circumferential surface of the drum 10 and to separate the tire 5 therefrom. Moreover, in the tire testing apparatus 1, the drum 10 or the tire 5 is controlled to be movable in a relatively transverse direction with respect to a direction of a rotation shaft of the drum 10.

In the drum shaft 13 for rotating the drum 10 and the tire shaft 51 for rotating the tire 5, angle encoders (rotary encoders) are individually provided, and individually measure angles (angle θ_{D} by which the drum 10 rotates from a reference point and angle θ_{T} by which the tire 5 rotates from the reference point) from the reference point. Note that any method other than the angles may be adopted if rotational positions from the reference point can be detected thereby.

The tire testing apparatus 1 includes a control computer 7 that performs a control thereof. The control computer 7 includes: a computing device 70 such as a CPU, which executes computing processing for a program; a storage device 71 such as a RAM and a hard disk, which stores information; a display device 73 such as a display, which displays information; an input device 72 such as a keyboard and a mouse, which is capable of inputting information; and a communication device 74 that transmits and receives a processing result of the computing device 70 and the information, which is stored in the storage device 71, via a network such as the Internet and a LAN.

When the computer is provided with a touch panel display, the display device 73 and the input device 72 may be composed integrally with each other. The touch panel display is often used, for example, for a portable communication terminal such as a tablet computer and a smartphone, but is not limited to this.

The touch panel display is a device in which functions of the display device 73 and the input device 72 are integrated with each other in that an input can be directly performed on a display thereof by a predetermined input device (pen for a touch panel), a finger and the like.

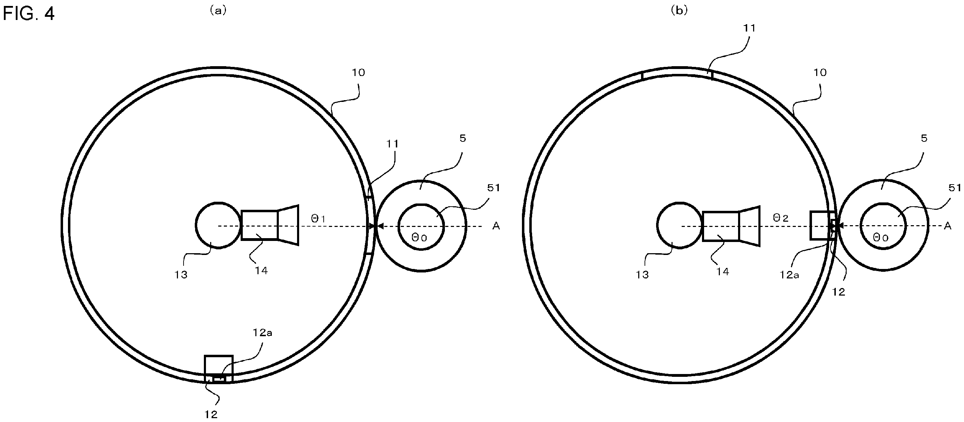

An arrangement relationship between the sensors 12a of the sensor installation portion 12, which are provided on the drum surface of the tire testing apparatus 1, and the transmission portion 11 is fixed. An angle (angle from the reference point) of the tire shaft 51 when the tire 5 is brought into ground contact with the drum 10 is defined as θ₀(θ_{T}=θ₀), and an angle (angle from the reference point) of the drum shaft 13, at which the imaging device 14 is capable of imaging the ground contact surface of the tire 5 via the transmission portion 11, is defined as θ₁(θ_{D}=θ₁). Moreover, an angle (angle from the reference point) of the drum shaft 13 when the ground contact surface of the tire 5, which serves as an imaging target, is brought into ground contact with the sensors 12a of the sensor installation portion 12, is defined as θ₂(θ_{D}=θ₂). Regarding the drum shaft 13 of the tire testing apparatus 1 and the tire shaft 51, the control computer 7 controls rotations of the respective shafts so that timing when θ_{T}=θ₀ and θ_{D}=θ₁ is established and timing when θ_{T}=θ₀ and θ_{D}=θ₂ is established are generated (synchronized). It is Figs. 4(a) and 4(b) that schematically illustrate this. For example, when a reference point A is present on an extension of respective centers of the drum shaft 13 and the tire shaft 51 as illustrated in Figs. 4(a) and 4(b), θ_{T} = 180 degrees (θ₀=180), θ_{D} = 0 degree (θ₁ = 0), and θ_{D} = 270 degrees (θ₂=270) are established. Then, the ground contact surface of the tire 5, which is imaged by the imaging device 14 via the transmission portion 11 at the time of θ_{T} = 180 degrees and θ_{D} = 0 degree and the ground contact force measured by the sensors 12a of the sensor installation portion 12 at the time of θ_{T} = 180 degrees and θ_{D} = 270 degrees become information for the same ground contact surface of the tire 5. Note that, in Figs. 4(a) and 4(b), the case in which the reference point of the angle θ_{D} of the drum shaft 13 and the reference point of the angle θ_{T} of the tire shaft 51 are the same is illustrated; however, points different from each other may be used as such reference points.

In general, a radius of the drum 10 and a radius of the tire 5 do not coincide with each other. Accordingly, to control rotation speeds of the drum shaft 13 and the tire shaft 51 as mentioned above is present as one of methods for synchronizing the drum 10 and the tire 5 with each other.

Moreover, as another method for synchronizing the drum 10 and the tire 5 with each other, the rotation speeds themselves of the drum shaft 13 and the tire shaft 51 are not controlled, but such a method as follows is present. While rotating the drum shaft 13 and the tire shaft 51 at an arbitrary number of revolutions (number of revolutions may be fixed or variable), the measurement by the sensors 12a of the sensor installation portion 12 and the imaging of the ground contact surface of the tire 5 using the imaging device 14 are performed in advance. Then, the angle θ_{T} of the tire shaft 51, the angle θ_{D} of the drum shaft 13 and the ground contact force measured by the sensors 12a at a point of measurement time and the angle θ_{T} of the tire shaft 51, the angle θ_{D} of the drum shaft 13 and the imaged image information at the point of measurement time are stored in association with each other. Then, a ground contact force and image information regarding a ground contact surface of a certain tire 5 can also be obtained by being specified on the basis of an angle θ_{T} of a tire shaft 51 of the ground contact surface of the tire 5 taken as such a processing target and an angle θ_{D} of the drum shaft 13, which corresponds thereto.

That is, timing when the angle θ_{T} of the tire shaft 51 when the ground contact surface of the tire 5 taken as a processing target is brought into ground contact with the sensors 12a of the sensor installation portion 12 and the transmission portion 11 becomes θ₀ is specified, and moreover, timing when the angle θ_{D} of the drum shaft 13 when the tire 5 is brought into ground contact with the transmission portion 11 of the drum 10 becomes θ₁ is specified. Likewise, timing when the angle θ_{D} of the drum shaft 13 when the tire 5 is brought into ground contact with the sensors 12a in the sensor installation portion 12 of the drum 10 becomes θ₂ is specified. Then, the drum shaft 13 and the tire shaft 51 are rotated for a predetermined time, whereby the image information of the ground contact surface of the tire 5 and the ground contact force of the tire 5 when 0 degree ≤ θ_{T} ≤ 360 degrees is established for the tire shaft 51 and 0 degree ≤ θ_{D} ≤ 360 degrees is established for the drum shaft 13 are individually acquired and measured in advance. Then, when there gather a predetermined threshold value or more (for example, 98% or more) of data of the respective items, image information of the ground contact surface of the tire 5, which is imaged via the transmission portion 11 by the imaging device 14 at the time of θ_{T}=180 degrees and θ_{D} = 0 degrees, and a ground contact force measured by the sensors 12a of the sensor installation portion 12 at the time of θ_{T}=180 degrees and θ_{D}=270 degrees are associated with each other.

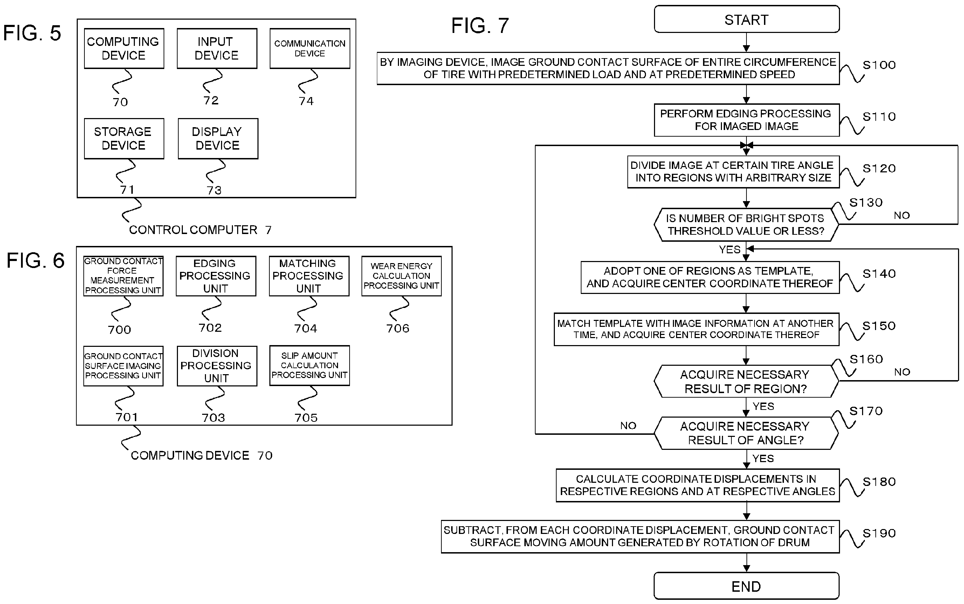

In Fig. 6, an example of a processing function in the control computer 7 is schematically illustrated in a block diagram. The computing device 70 of the control computer 7 includes a ground contact force measurement processing unit 700, a ground contact surface imaging processing unit 701, an edging processing unit 702, a division processing unit 703, a matching processing unit 704, a slip amount calculation processing unit 705, a wear energy calculation processing unit 706. Note that, though a case of achieving the above-mentioned respective processing functions in the control computer 7 that controls the tire testing apparatus 1 is described in this description, the above-described respective processing functions may be achieved by another computer than the control computer 7 that controls the tire testing apparatus 1.

The ground contact force measurement processing unit 700 measures values of the sensors 12a, which are measured by the sensors 12a of the sensor installation portion 12 installed on the drum surface, the angle θ_{T} of the tire shaft 51 from the reference point at that time, and the angle θ_{D} of the drum shaft 13 from the reference point at that time. The measured values of the sensors 12a and the angle θ_{T} of the tire shaft 51 and the angle θ_{D} of the drum shaft 13 at that time and a time t are stored in the storage device 71 in association with one another.

By using the imaging device 14, the ground contact surface imaging processing unit 701 images the ground contact surface of the tire 5, which is brought into ground contact with the transmission portion 11, via the transmission portion 11 installed on the drum surface. Since the imaging device 14 images the ground contact surface of the tire 5 via the transmission portion 11, the ground contact surface of the tire 5 is imaged via the transmission portion 11 by the imaging device 14 when the angle of the drum shaft 13 is an angle θ₁(θ_{D}=θ₁) at which the imaging via the transmission portion 11 is possible. Moreover, the imaging device 14 not only performs the imaging when the angle of the drum shaft 13 is θ₁, but also may always perform the imaging in advance, associate the angle θ_{D} of the drum shaft 13 and the angle θ_{T} of the tire shaft 51 at that time with each other, and extract image information when the angle of the drum shaft 13 is θ₁.

Preferably, the ground contact surface imaging processing unit 701 images a ground contact surface of an entire circumference (0 degree ≤ θ_{T} ≤ 360 degrees as the angle of the tire shaft 51) of the tire 5. The image information of the imaged tire surface is stored in the storage device 71 in association with the time t and the angle θ_{T} of the tire shaft 51.

The edging processing unit 702 executes edging processing for detecting an edge of the image information imaged by the ground contact surface imaging processing unit 701. Such edge detection processing is processing for detecting an outline included in the image information, and includes a variety of known methods. For example, changes (gradients) of respective pixel values of the image information are calculated by differentiation and the like, whereby the edge can be detected. In the present invention, since the ground contact surface of the tire 5 is imaged, an outline (tread pattern) of the ground contact surface of the tire 5 will be detected.

The division processing unit 703 divides image information on a certain ground contact surface (angle of a certain tire shaft 51), the image information being edged by the edging processing unit 702, into regions with a predetermined size. Then, when the number of bright spot pixels in each of the regions is a predetermined threshold value or more, the division processing unit 703 further divides the region. It is preferable that the division processing unit 703 divide the region into two; however, no limitations are imposed thereon. Note that the division processing unit 703 does not divide the region if the number of bright spot pixels in the region is less than the predetermined threshold value. The division processing unit 703 repeats the division of the regions until the number of bright spot pixels in the region becomes less than the predetermined threshold value. The division of the region, which is based on the number of bright spot pixels, is performed for matching processing by a desired resolution. Accordingly, if the division of the region is such division processing that the desired resolution is obtained, then a determination may be made on the basis of a criterion other than the bright spot pixels, for example, a ratio of the bright spot pixels and pixels other than the same. Moreover, even in the case of using the number of bright spot pixels, the processing may be other than such a comparison between the number of pixels and the threshold value.

The matching processing unit 704 adopts, as a template, one of the regions divided by the division processing unit 703, and acquires a center coordinate thereof. Moreover, the matching processing unit 704 performs matching processing for image information edged at different time and the region of the template with each other, specifies a corresponding region (for example, a region with highest similarity), and acquires a center coordinate thereof. The matching processing unit 704 executes the matching processing in a necessary region and an angle (ground contact surface of the tire 5) of the tire shaft 51.

The slip amount calculation processing unit 705 computes a difference between the center coordinate of the template and the center coordinate of the region specified as a result of the matching processing in each region and each angle of the tire shaft 51. Moreover, the slip amount calculation processing unit 705 further subtracts a longitudinal ground contact surface moving amount (= time (differential time Δt from such an image adopted as the template at the time of the matching processing) × speed), which is generated by the rotation of the drum 10, from a computing result of the above-described difference. By accumulating such results as calculated, the slip amount is calculated.

The wear energy calculation processing unit 706 associates the ground contact force measured by the ground contact force measurement processing unit 700 and the slip amount calculated by the slip amount calculation processing unit 705 with each other, and computes these, for example, multiplies these by each other, thereby calculating wear energy.

Next, an example of a processing process of the tire testing apparatus 1 of the present invention will be described with reference to a flowchart of Fig. 7.

First, in the tire testing apparatus 1, the tire 5 taken as a processing target is attached to the tire shaft 51, and then the tire 5 is rotated about the tire shaft 51 with a predetermined load and at a predetermined speed. Thus, the ground contact force measurement processing unit 700 measures the values of the sensors 12a, which are measured by the sensors 12a of the sensor installation portion 12 installed on the drum surface, the angle θ_{T} of the tire shaft 51 from the reference point at that time, and the angle θ_{D} of the drum shaft 13 from the reference point at that time, and allows storage of the measured values of the sensors 12a and the angles θ_{T} and θ_{D} in association with the time t.

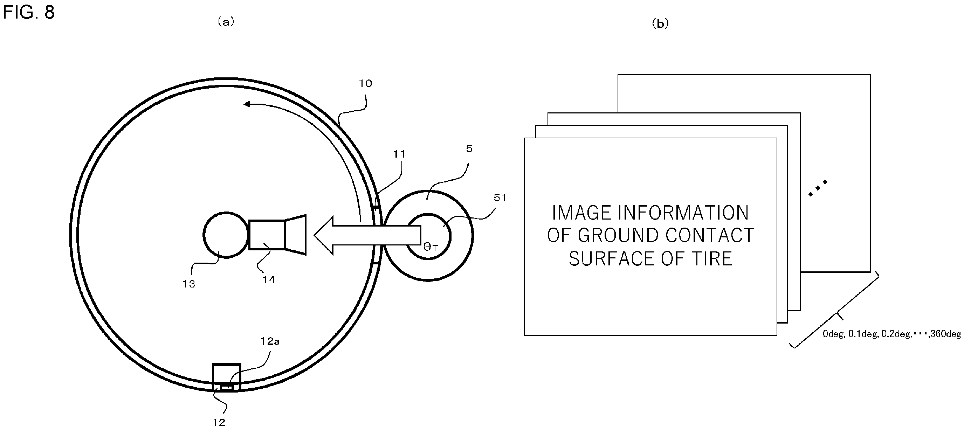

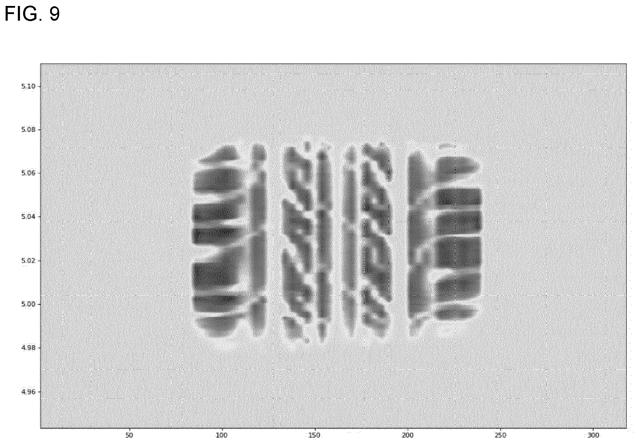

Moreover, simultaneously, the ground contact surface imaging processing unit 701 images the tire 5, which is brought into ground contact with the transmission portion 11, via the transmission portion 11 installed on the drum surface, thereby acquiring the image information of the ground contact surface of the entire circumference or part of the tire 5 (S100). The ground contact surface imaging processing unit 701 associates the angle θ_{T} of the tire shaft 51 and the angle θ_{D} of the drum shaft 13 at that time and the time t with the imaged image information, and causes the storage device 71 to store the image information. It is Figs. 8(a) and 8(b) that schematically illustrates this. Fig 8(a) is a view schematically illustrating a state of imaging the ground contact surface of the tire 5, and Fig. 8(b) is a view illustrating image information obtained thereby, the image information being regarding the ground contact surface of the tire 5 at every angle θ_{T} of the tire shaft 51. Moreover, an example of the image information of the ground contact surface of the tire 5 is illustrated in Fig. 9.

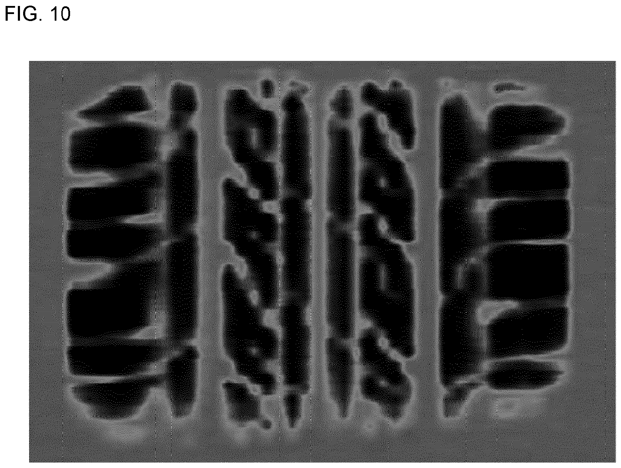

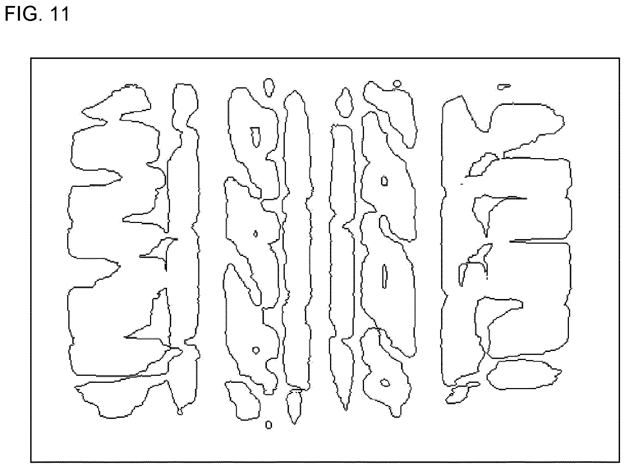

When the image information of the ground contact surface of the tire 5 is acquired as described above, the edging processing unit 702 performs gray-scale conversion for each of the image information, and performs the edging processing for the image information subjected to the gray-scale conversion (S110). The image information obtained by performing the gray-scale conversion for the image information of the ground contact surface of the tire 5 in Fig. 9 is illustrated in Fig. 10. Moreover, such image information thus edged is illustrated in Fig. 11.

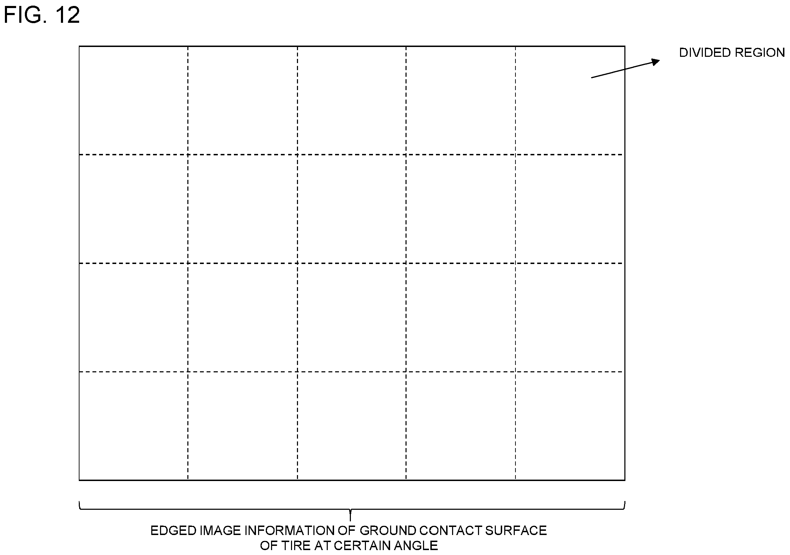

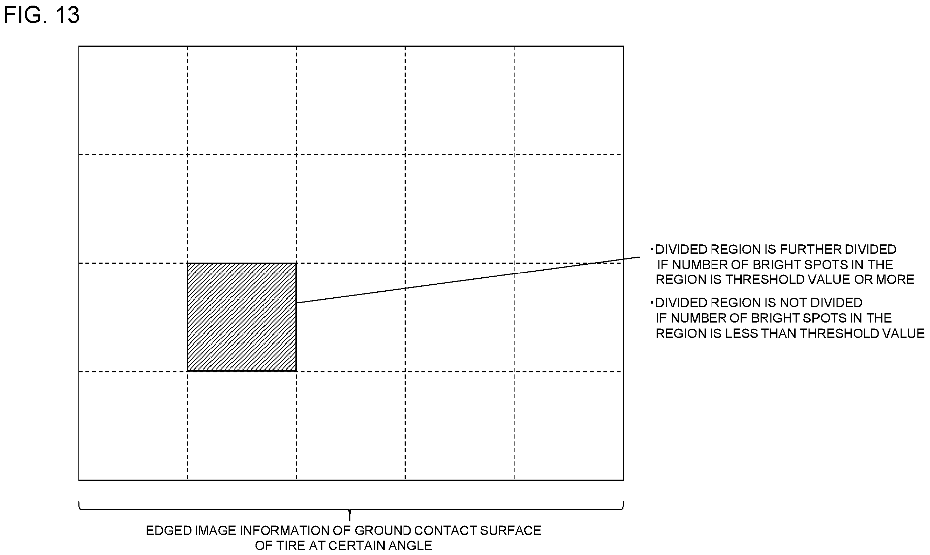

After the edging processing in the edging processing unit 702, the division processing unit 703 divides the image information on the ground contact surface (angle of the tire shaft 51, which corresponds to the ground contact surface taken as a processing target) taken as a processing target, the image information having been edged by the edging processing unit 702, into regions with a predetermined size (S120). It is Fig. 12 that schematically illustrates this. Then, when the number of bright spot pixels in each of the regions satisfies a predetermined condition, for example, is a predetermined threshold value or more, the division processing unit 703 further divides the region, and repeats the division of the regions until the number of bright spot pixels in a region thus already divided becomes less than the predetermined threshold value (S130). It is Fig. 13 that schematically illustrates this.

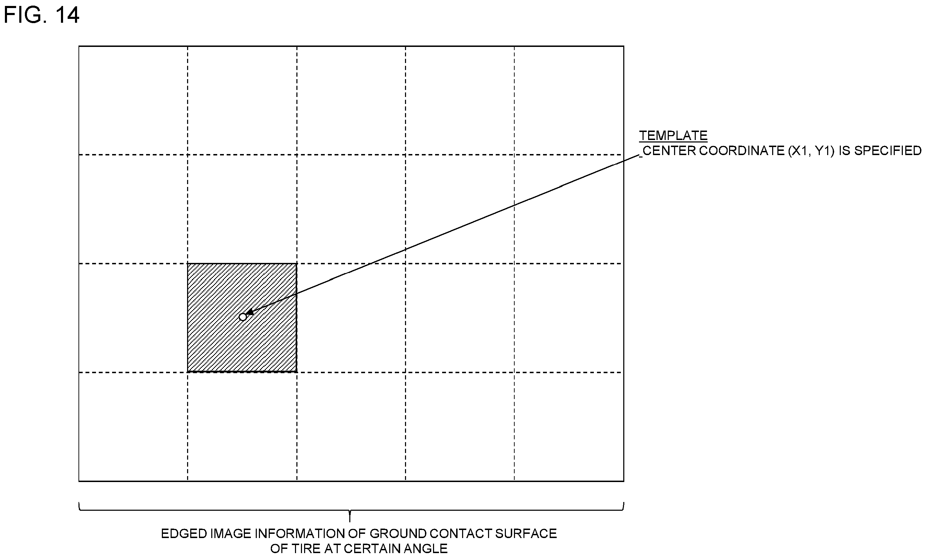

When the region is divided until the number of bright spot pixels becomes less than the predetermined threshold value as described above, the matching processing unit 704 adopts one of such regions as a template, and acquires a center coordinate (X1, Y1) thereof (S140). It is Fig. 14 that schematically illustrates this.

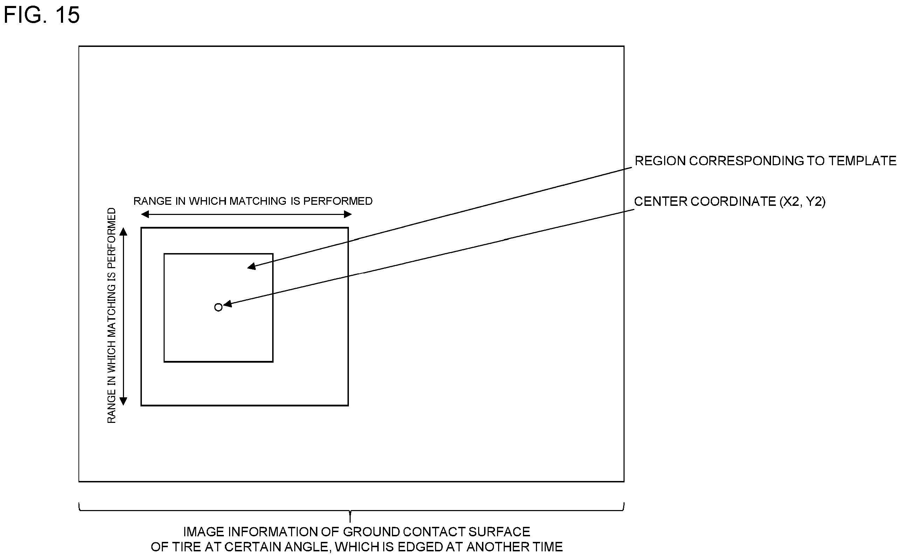

Moreover, regarding the image information (image information at the time t) divided in S120, the matching processing unit 704 performs matching processing for image information edged at different time (time t+Δt) from the image information (image information at the time t) divided in S120, and the image in the region of the template with each other, specifies a corresponding region (for example, a region with highest similarity), and acquire a center coordinate (X2, Y2) thereof (S150). At this time, as a range to be subjected to the matching processing, only a peripheral fixed range of the region that composes the template (that is, a range composed of coordinates of the template in the image information edged at the time t) is recommended to be subjected to be the matching processing. This is because, since many similar surfaces are included in the ground contact surface of the tire 5, accuracy of the matching processing can be improved in such a manner that the range to be subjected to the matching processing is limited to such a fixed range. It is Fig. 15 that schematically illustrates this. Then, the storage device 71 is caused to store a correspondence relationship between the center coordinate (X1, Y1) of the template and the center coordinate (X2, Y2).

The above processing is executed for all the regions of the image information in the ground contact surface (angle of the tire shaft 51) of the tire 5, for which the slip amount is required to be calculated (S160, S170).

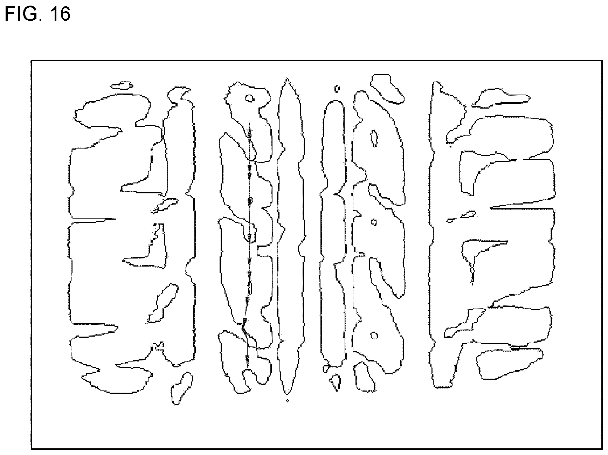

Then, when such correspondence relationships between the center coordinate (X1, Y1) of the template and the center coordinate (X2, Y2) are specified for all the regions and all the angles of the tire shaft 51, for which such slip amounts are required to be calculated, the slip amount calculation processing unit 705 calculates a displacement of the center coordinate on the basis of the correspondence relationship (S180). That is, the slip amount calculation processing unit 705 computes a difference of the center coordinate (X2, Y2) from the center coordinate (X1, Y1), and calculates the displacement. At this time, the slip amount calculation processing unit 705 further subtracts the longitudinal ground contact surface moving amount (= time (Δt) × speed), which is generated by the rotation of the drum 10, from the computing result of the above-described difference (S190). By accumulating such results as calculated, the slip amount is calculated. The slip amount calculated as described above is displayed to be superimposed on the edged image information (Fig. 11) at the time t. The slip amount is recommended to be displayed so as to be visually distinguishable from one another by arrows having lengths, thicknesses, colors or the like, each of which corresponds to the slip amount. It is Fig. 16 that schematically illustrates this.

When the slip amount on the ground contact surface (angle θ_{T} of the tire shaft 51) of the tire 5 taken as a processing target is calculated as described above, the wear energy calculation processing unit 706 extracts the ground contact force, which corresponds to the angle θ_{T} of the tire shaft 51, from the storage unit, computes these, and calculates wear energy.

Such processing as described above is executed, whereby the region at the time of performing the matching processing for calculating the slip amount can be set automatically, and accordingly, a load applied to the matching processing can also be reduced.

### Industrial Applicability

By using the tire testing apparatus 1 of the present invention, the range in which such image pattern matching for calculating the slip amount of the tire 5 can be set automatically and appropriately.

### Reference Signs List

- 1: tire testing apparatus
- 5: tire
- 7: control computer
- 10: drum
- 11: transmission portion
- 12: sensor installation portion
- 12a: sensor
- 13: drum shaft
- 14: imaging device
- 51: tire shaft
- 70: computing device
- 71: storage device
- 72: input device
- 73: display device
- 74: communication device
- 700: ground contact force measurement processing unit
- 701: ground contact surface imaging processing unit
- 702: edging processing unit
- 703: division processing unit
- 704: matching processing unit
- 705: slip amount calculation processing unit
- 706: wear energy calculation processing unit

## Claims

1. A tire testing apparatus (1) of a drum type, comprising:
a drum (10) including a transmission portion (11) on an outer circumferential surface;
an imaging device (14) that images a ground contact surface of a tire (5) from an inside of the drum (10) via the transmission portion (11), the tire (5) being attached to a tire shaft (51);
a ground contact surface imaging processing unit (701) that images, using the imaging device (14), the ground contact surface when the tire (5) is brought into ground contact with the transmission portion (11), thereby acquiring image information of the ground contact surface of the entire circumference or part of the tire (5), the image information being the imaged ground contact surface of the tire at every angle θ_{T} of the tire shaft (51);
an edging processing unit (702) that performs edging processing of the image information of the imaged ground contact surface of the tire (5);
a division processing unit (703) that performs division processing of the image information subjected to the edging processing into regions which satisfy a predetermined resolution condition;
a matching processing unit (704) that performs matching processing by using the divided regions,
wherein the matching processing unit (704) adopts, as a template, one of the regions divided by the division processing unit (703), and performs matching processing for matching the region of the template and the
image information of the ground contact surface of the tire (5) with each other, the image information being matched is subjected to the edging processing at a different time from the divided region of the template, ; and
a slip amount calculation processing unit (705) that calculates a slip amount by using a result of the matching processing and a ground contact surface moving amount generated by a rotation amount of the drum (10),
wherein the ground contact surface moving amount represents a differential time multiplied by a speed of the drum (10).

2. The tire testing apparatus (1) according to claim 1,
wherein the division processing unit (703):
divides the image information subjected to the edging processing into regions with a predetermined size; and
in each of the divided regions, performs processing for repeating the division of the region until a number of bright spot pixels in the region becomes less than a predetermined threshold value.

3. The tire testing apparatus (1) according to claim 1 or 2,
wherein the slip amount calculation processing unit (705):
computes a coordinate of a point at a predetermined position in the divided region and a coordinate of a corresponding point in the matched region and thereby calculates a displacement; and
calculates the slip amount by using the calculated displacement.

4. A computer program comprising instructions which, when the program is executed by a computer, cause the
computer to function as:
a ground contact surface imaging processing unit (701) that images, using an imaging device (14), a ground contact surface when a tire (5) is brought into ground contact with a transmission portion (11) of a drum (10), thereby acquiring image information of the ground contact surface of the entire circumference or part of the tire (5), the image information being the imaged ground contact surface of the tire at every angle θ_{T} of a tire shaft (51);
, the imaging device (14) imaging the ground contact surface of the tire (5) from an inside of the drum (10) via the transmission portion (11) provided on an outer circumferential surface of the drum (10), the tire (5) being attached to the tire shaft (51);
an edging processing unit (702) that performs edging processing of the image information of the imaged ground contact surface of the tire (5);
a division processing unit (703) that performs division processing of the image information subjected to the edging processing into regions which satisfy a predetermined resolution condition;
a matching processing unit (704) that performs matching processing by using the divided regions,
wherein the matching processing unit (704) adopts, as a template, one of the regions divided by the division processing unit (703), and performs matching processing for matching the region of the template and the
image information of the ground contact surface of the tire (5) with each other, the image information being matched is subjected to the edging processing at a different time from the divided region of the template, and
a slip amount calculation processing unit (705) that calculates a slip amount by using a result of the matching processing and a ground contact surface moving amount generated by a rotation amount of the drum (10),
wherein the ground contact surface moving amount represents a differential time multiplied by a speed of the drum (10).

## Patentansprüche

1. Reifentestgerät (1) vom Trommeltyp, umfassend:
eine Trommel (10) mit einem Übertragungsabschnitt (11) an einer äußeren Umfangsfläche
eine Abbildungsvorrichtung (14), die eine Bodenkontaktfläche eines Reifens (5) von einer Innenseite der Trommel (10) über den Übertragungsabschnitt (11) abbildet, wobei der Reifen (5) an einer Reifenwelle (51) befestigt ist;
eine Bodenkontaktflächen-Abbildungsverarbeitungseinheit (701), die unter Verwendung der Abbildungsvorrichtung (14) die Bodenkontaktfläche abbildet, wenn der Reifen (5) in Bodenkontakt mit dem Übertragungsabschnitt (11) gebracht wird, wodurch Bildinformationen der Bodenkontaktfläche des gesamten Umfangs oder eines Teils des Reifens (5) erfasst werden, wobei die Bildinformationen die abgebildete Bodenkontaktfläche des Reifens in jedem Winkel θ_{T} der Reifenwelle (51) sind;
eine Kantenverarbeitungseinheit (702), die eine Kantenverarbeitung der Bildinformationen der abgebildeten Bodenkontaktfläche des Reifens (5) durchführt;
eine Teilungsverarbeitungseinheit (703), die eine Teilungsverarbeitung der Bildinformation, die der Kantenverarbeitung unterzogen wurde, in Bereiche durchführt, die eine vorbestimmte Auflösungsbedingung erfüllen;
eine Anpassungsverarbeitungseinheit (704), die eine Anpassungsverarbeitung unter Verwendung der unterteilten Bereiche durchführt,
wobei die Anpassungsverarbeitungseinheit (704) einen der durch die Teilungsverarbeitungseinheit (703) geteilten Bereiche als eine Schablone annimmt und eine Anpassungsverarbeitung zum Anpassen des Bereichs der Schablone und der Bildinformation der Bodenkontaktoberfläche des Reifens (5) aneinander durchführt, wobei die Bildinformation, die angepasst wird, der Kantenverarbeitung zu einer anderen Zeit als dem geteilten Bereich der Schablone unterzogen wird; und
eine Schlupfbetragsberechnungs-Verarbeitungseinheit (705), die einen Schlupfbetrag unter Verwendung eines Ergebnisses der Anpassungsverarbeitung und eines durch einen Rotationsbetrag der Trommel (10) erzeugten Bodenkontaktflächen-Bewegungsbetrags berechnet,
wobei der Bewegungsbetrag der Bodenkontaktfläche eine Differenzzeit multipliziert mit einer Geschwindigkeit der Trommel (10) darstellt.

2. Reifentestgerät (1) nach Anspruch 1,
wobei die Teilungsverarbeitungseinheit (703):
die Bildinformation, die der Kantenverarbeitung unterzogen wird, in Bereiche mit einer vorbestimmten Größe unterteilt; und
in jedem der unterteilten Bereiche eine Verarbeitung zum Wiederholen der Unterteilung des Bereichs durchführt, bis eine Anzahl von hellen Fleckenpixeln in dem Bereich kleiner als ein vorbestimmter Schwellenwert wird.

3. Reifentestgerät (1) nach Anspruch 1 oder 2,
wobei die Schlupfbetragsberechnungs-Verarbeitungseinheit (705):
eine Koordinate eines Punktes an einer vorbestimmten Position in dem geteilten Bereich und eine Koordinate eines entsprechenden Punktes in dem angepassten Bereich berechnet und dadurch eine Verschiebung berechnet; und
Berechnen des Schlupfbetrags unter Verwendung der berechneten Verschiebung.

4. Computerprogramm, das Anweisungen enthält, die, wenn das Programm von einem Computer ausgeführt wird, den Computer veranlassen, wie folgt zu funktionieren:
eine Bodenkontaktoberflächen-Abbildungsverarbeitungseinheit (701), die unter Verwendung einer Abbildungsvorrichtung (14) eine Bodenkontaktoberfläche abbildet, wenn ein Reifen (5) in Bodenkontakt mit einem Übertragungsabschnitt (11) einer Trommel (10) gebracht wird, wodurch Bildinformationen der Bodenkontaktoberfläche des gesamten Umfangs oder eines Teils des Reifens (5) erfasst werden,
wobei die Bildinformation die abgebildete Bodenkontaktfläche des Reifens bei jedem Winkel θ_{T} einer Reifenwelle (51) ist;
die Abbildungsvorrichtung (14) die Bodenkontaktfläche des Reifens (5) von der Innenseite der Trommel (10) über den Übertragungsabschnitt (11) abbildet, der an einer äußeren Umfangsfläche der Trommel (10) vorgesehen ist, wobei der Reifen (5) an der Reifenwelle (51) befestigt ist;
eine Kantenverarbeitungseinheit (702), die eine Kantenverarbeitung der Bildinformation der abgebildeten Bodenkontaktfläche des Reifens (5) durchführt;
eine Teilungsverarbeitungseinheit (703), die eine Teilungsverarbeitung der Bildinformation, die der Kantenverarbeitung unterzogen wurde, in Bereiche durchführt, die eine vorbestimmte Auflösungsbedingung erfüllen;
eine Anpassungsverarbeitungseinheit (704), die eine Anpassungsverarbeitung unter Verwendung der unterteilten Bereiche durchführt,
wobei die Anpassungsverarbeitungseinheit (704) einen der durch die Teilungsverarbeitungseinheit (703) geteilten Bereiche als eine Schablone annimmt und eine Anpassungsverarbeitung zum Anpassen des Bereichs der Schablone und der Bildinformation der Bodenkontaktfläche des Reifens (5) aneinander durchführt, wobei die Bildinformation, die angepasst wird, der Kantenverarbeitung zu einer anderen Zeit als der geteilte Bereich der Schablone unterzogen wird; und
eine Schlupfbetragsberechnungs-Verarbeitungseinheit (705), die einen Schlupfbetrag unter Verwendung eines Ergebnisses der Anpassungsverarbeitung und eines durch einen Rotationsbetrag der Trommel (10) erzeugten Bodenkontaktflächen-Bewegungsbetrags berechnet,
wobei der Bewegungsbetrag der Bodenkontaktfläche eine Differenzzeit multipliziert mit einer Geschwindigkeit der Trommel (10) darstellt.

## Revendications

1. Un dispositif (1) de test de pneumatiques du type à tambour, comprenant :
un tambour (10) comprenant une partie de transmission (11) sur une surface circonférentielle externe ;
un dispositif d'imagerie (14) qui prend des images d'une surface de contact avec le sol d'un pneumatique (5) depuis l'intérieur du tambour (10) via la partie de transmission (11), le pneumatique (5) étant fixé à un arbre de pneumatique (51);
une unité (701) de traitement d'imagerie de surface de contact avec le sol qui prend des images, en utilisant le dispositif d'imagerie (14), la surface de contact avec le sol lorsque le pneumatique (5) est amené en contact avec le sol avec la partie de transmission (11), acquérant ainsi des informations d'image de la surface de contact avec le sol de la circonférence entière ou d'une partie du pneumatique (5), les informations d'image étant la surface de contact du pneumatique avec le sol prise en image à chaque angle θT de l'arbre de pneumatique (51) ;
une unité (702) de traitement de bordure qui effectue un traitement de bordure des informations d'image de la surface de contact du pneumatique (5) avec le sol prise en image ;
une unité (703) de traitement de division qui effectue un traitement de division des informations d'image soumises au traitement de bordure en des zones qui satisfont à une condition de résolution prédéterminée ;
une unité (704) de traitement de correspondance qui effectue un traitement de correspondance en utilisant les zones divisées,
l'unité (704) de traitement de correspondance adoptant, en tant que modèle, l'une des zones divisées par l'unité (703) de traitement de division et effectuant un traitement de correspondance de façon à faire correspondre la zone du modèle et les informations d'image de la surface de contact avec le sol du pneumatique (5) les unes avec les autres, les informations d'image mises en correspondance étant soumises au traitement de bordure à un moment différent par rapport à la zone divisée du modèle, et
une unité (705) de traitement de calcul de degré de glissement qui calcule un degré de glissement en utilisant un résultat du traitement de correspondance et un degré de déplacement de surface de contact avec le sol généré par un degré de rotation du tambour (10),
le degré de déplacement de la surface de contact avec le sol représentant un temps différentiel multiplié par une vitesse du tambour (10).

2. Le dispositif (1) de test de pneumatiques selon la revendication 1,
dans lequel l'unité (703) de traitement de division :
divise les informations d'image soumises au traitement de bordure en des zones ayant une taille prédéterminée ; et
dans chacune des zones divisées, effectue un traitement pour répéter la division de la zone jusqu'à ce qu'un nombre de pixels de points lumineux dans la zone devienne inférieur à une valeur de seuil prédéterminée.

3. Le dispositif (1) de test de pneumatiques selon la revendication 1 ou la revendication 2,
dans lequel l'unité (705) de traitement de calcul de degré de glissement :
calcule une coordonnée d'un point à une position prédéterminée dans la zone divisée et une coordonnée d'un point correspondant dans la zone de correspondance et calcule ainsi un déplacement ; et
calcule le degré de glissement en utilisant le déplacement calculé.

4. Un programme informatique comprenant des instructions qui, lorsque le programme est exécuté par un ordinateur, amène l'ordinateur à fonctionner en tant que :
une unité (701) de traitement d'imagerie de surface de contact avec le sol qui prend des images, en utilisant un dispositif d'imagerie (14), une surface de contact avec le sol lorsqu'un pneumatique (5) est amené en contact avec le sol avec une partie de transmission (11) d'un tambour (10), acquérant ainsi des informations d'image de la surface de contact avec le sol de la circonférence entière ou d'une partie du pneumatique (5), les informations d'image étant la surface de contact avec le sol du pneumatique prise en image à chaque angle θT d'un arbre de pneumatique (51) ; le dispositif d'imagerie (14) prenant des images de la surface de contact avec le sol du pneumatique (5) depuis l'intérieur du tambour (10) via la partie de transmission (11) prévue sur une surface circonférentielle extérieure du tambour (10) le pneumatique (5) étant fixé à l'arbre de pneumatique (51) ;
une unité (702) de traitement de bordure qui effectue un traitement de bordure des informations d'image de la surface de contact du pneumatique (5) avec le sol prise en image ;
une unité (703) de traitement de division qui effectue un traitement de division des informations d'image soumises au traitement de bordure en des zones qui satisfont à une condition de résolution prédéterminée ;
une unité (704) de traitement de correspondance qui effectue un traitement de correspondance en utilisant les zones divisées,
l'unité (704) de traitement de correspondance adoptant, en tant que modèle, l'une des zones divisées par l'unité (703) de traitement de division et effectuant un traitement de correspondance de façon à faire correspondre la zone du modèle et les informations d'image de la surface de contact avec le sol du pneumatique (5) les unes avec les autres, les informations d'image mises en correspondance étant soumises au traitement de bordure à un moment différent par rapport à la zone divisée du modèle, et
une unité (705) de traitement de calcul de degré de glissement qui calcule un degré de glissement en utilisant un résultat du traitement de correspondance et un degré de déplacement de surface de contact avec le sol généré par un degré de rotation du tambour (10),
le degré de déplacement de la surface de contact avec le sol représentant un temps différentiel multiplié par une vitesse du tambour (10).
